# EUROPEAN PATENT APPLICATION

(11) **EP 4 644 699 A1**
(43) Date of publication of application: **05.11.2025**
(21) Application number: 23911414.3
(22) Date of filing: 13.11.2023
(51) Int. Cl.: F04B 49/06, F04B 23/02, F04C 5/00, G05D 7/06

(54) **LIQUID EJECTION DEVICE**

(30) Priority: 26.12.2022 JP 2022207980
(71) Applicant: HITACHI HIGH-TECH CORPORATION, Tokyo 105-6409 (JP)
(72) Inventor: KAWACHI, Ryosuke, Tokyo 105-6409 (JP); SUGIYAMA, Hidetoshi, Tokyo 105-6409 (JP); ENDO, Masashi, Tokyo 105-6409 (JP)
(74) Representative: Strehl & Partner mbB
(86) International application number: PCT/JP2023/040825
(87) International publication number: WO 2024/142631

(57) **Abstract**

Performance of a liquid discharge device that performs discharge a liquid by a constant amount is improved. As a method thereof, used is a liquid discharge device including: a pump configured to feed a liquid; a discharge unit configured to discharge the liquid; a pressure sensor configured to monitor a pressure of the liquid; a discharge solenoid valve configured to control discharge of the liquid in the discharge unit; a control unit configured to control the pressure of the liquid to be constant; and a flow path of the liquid that connects the pump, the discharge unit, the pressure sensor, and the discharge solenoid valve to each other, in which a discharge amount of the liquid is controlled by an opening and closing time of the discharge solenoid valve in a state in which the pressure of the liquid is controlled to be constant by the control unit.

## Description

### Technical Field

The present invention relates to a liquid discharge device, and more particularly, to a method for quantitatively discharging a reagent in an automatic analyzer and an automatic staining device.

### Background Art

In the related art, as one of methods for performing discharge of a certain amount of liquid (for example, a reagent), a method for controlling a discharge amount by changing an internal volume of a syringe or the like by a certain integral is known, as disclosed in PTL 1 (JP 2019-124529A). As another method for discharging a certain amount of liquid, a method for controlling the discharge amount by opening and closing a solenoid valve in a flow path for a certain time in a state in which a pressure is applied to the liquid by compressed air or the like is known. As such a technique, PTL 2 (JP 2009-195774A) discloses that a supply amount of a liquid is controlled by controlling an opening degree of a constant flow valve when the liquid is pumped.

### Citation List

### Patent Literature

PTL 1: JP2019-124529A
PTL 2: JP2009-195774A

### Summary of Invention

### Technical Problem

However, in the method using the syringe, it is difficult to maintain a discharge pressure, perform continuous discharge, and control the discharge amount of each of a plurality of discharge units from immediately after the start of discharge to the end.

When the discharge amount is controlled by opening and closing the solenoid valve for a certain time, air bubbles are likely to be generated inside or around the discharged liquid, and the quality of the liquid may deteriorate. It is necessary to use a liquid tank having a sealing structure with pressure resistance to store the liquid to be discharged, but at the time of liquid replenishment, the inside of the tank needs to be opened to the atmosphere, and the system needs to be stopped during that time. The liquid has a configuration of being constantly in contact with the compressed air in the liquid tank, increasing the risk of contamination. Internal cleaning is performed when pollution (contamination or the like) occurs in the flow path, but since the liquid tank has a sealing structure, the flow path cannot be cleaned quickly, and as a result, the system needs to be stopped for a long time.

The invention has been conceived to solve the above problems, and an object of the invention is to improve the performance of a liquid discharge device.

### Solution to Problem

An outline of a representative one among embodiments disclosed in the present application will be briefly described as follows.

A liquid discharge device that is one embodiment includes: a pump configured to feed a liquid; a discharge unit configured to discharge the liquid; a pressure sensor configured to monitor a pressure of the liquid; a discharge solenoid valve configured to control discharge of the liquid in the discharge unit; a control unit configured to control the pressure of the liquid to be constant; and a flow path of the liquid that connects the pump, the discharge unit, the pressure sensor, and the discharge solenoid valve to one another, in which a liquid discharge amount is controlled by an opening and closing time of the discharge solenoid valve in a state in which the pressure of the liquid is controlled to be constant by the control unit.

### Advantageous Effects of Invention

According to the invention, a liquid discharge device that improves processing efficiency can be provided.

### Brief Description of Drawings

[FIG. 1] FIG. 1 is a schematic diagram illustrating a liquid discharge device according to Embodiment 1.
[FIG. 2] FIG. 2 is a flowchart illustrating liquid pressure control according to Embodiment 1.
[FIG. 3] FIG. 3 is a schematic diagram illustrating a liquid discharge device according to Embodiment 2.
[FIG. 4] FIG. 4 is a flowchart illustrating liquid pressure control according to Embodiment 2.
[FIG. 5] FIG. 5 is a waveform diagram illustrating a pressure waveform of a liquid during pressure control.
[FIG. 6] FIG. 6 is a flowchart illustrating liquid pressure control according to Embodiment 3.
[FIG. 7] FIG. 7 is a schematic diagram illustrating a liquid discharge device according to Embodiment 4.
[FIG. 8] FIG. 8 is a timing chart illustrating discharge timings of discharge solenoid valves according to Embodiment 4.
[FIG. 9] FIG. 9 is a schematic diagram illustrating a liquid discharge device according to Embodiment 5.
[FIG. 10] FIG. 10 is a flowchart illustrating switching control of a liquid container using a liquid detection sensor according to Embodiment 5.
[FIG. 11] FIG. 11 is a flowchart illustrating switching control of the liquid container using a liquid remaining amount count value without using the liquid detection sensor according to Embodiment 5.
[FIG. 12] FIG. 12 is a flowchart illustrating switching control of the liquid container when the liquid detection sensor is used together with the liquid remaining amount count value according to Embodiment 5.
[FIG. 13] FIG. 13 is a schematic diagram illustrating an aspiration state in a liquid discharge device using a syringe as a liquid discharge device according to Comparative Example 1.
[FIG. 14] FIG. 14 is a schematic diagram illustrating a discharge state in the liquid discharge device using the syringe as the liquid discharge device according to Comparative Example 1.
[FIG. 15] FIG. 15 is a schematic diagram illustrating, as a liquid discharge device according to Comparative Example 2, a liquid discharge device that performs discharge of a liquid by opening and closing a solenoid valve for a certain time using compressed air as a pressure source.

### Description of Embodiments

Hereinafter, embodiments of the invention will be described in detail with reference to the drawings. In all the drawings for describing the embodiments, members having the same function are denoted by the same reference numeral, and the repeated description thereof will be omitted. In the embodiments, the description of the same or similar parts will not be repeated in principle unless particularly necessary.

### <Room for Improvement>

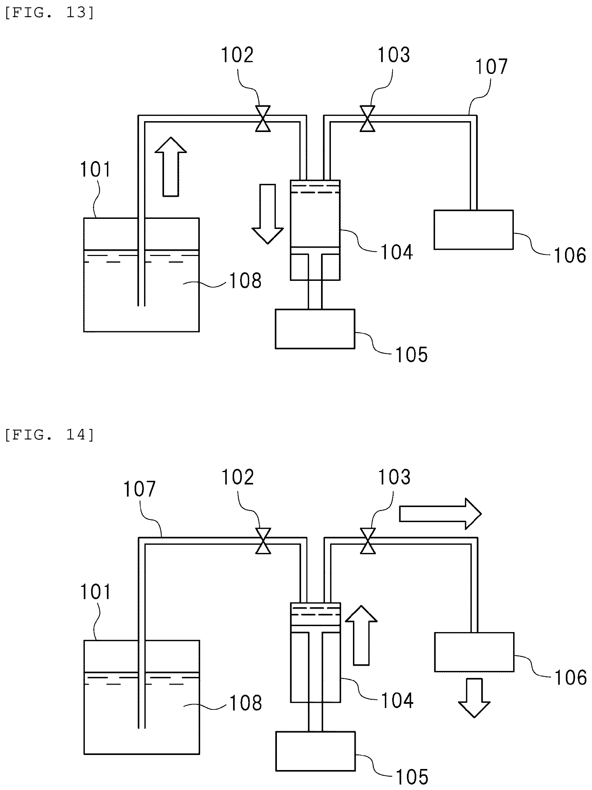

Hereinafter, the room for improvement will be described in detail with reference to FIGS. 13 to 15.

FIG. 13 is a schematic diagram illustrating an aspiration state in a liquid discharge device (hereinafter, referred to as a syringe type) according to Comparative Example 1 using a syringe. The liquid discharge device includes a liquid container 101 containing a liquid 108, an aspiration solenoid valve 102, a discharge solenoid valve 103, a syringe 104, a syringe drive mechanism 105, a discharge unit 106, and a flow path 107. In a syringe aspiration operation illustrated in FIG. 13, the liquid 108 is aspirated by driving the syringe 104 in an aspiration direction under a condition that the aspiration solenoid valve 102 is opened and the discharge solenoid valve 103 is closed.

FIG. 14 is a schematic diagram illustrating a discharge state in the liquid discharge device described with reference to FIG. 13. In a syringe discharge operation illustrated in FIG. 14, the liquid 108 is discharged by driving the syringe 104 in a discharge direction under a condition that the aspiration solenoid valve 102 is closed and the discharge solenoid valve 103 is opened. The liquid discharge device according to Comparative Example 1 continuously performs aspiration and discharge of the liquid 108 by repeating the aspiration operation described with reference to FIG. 13 and the discharge operation described with reference to FIG. 14.

However, in the liquid discharge device using the syringe, since the syringe 104 starts the discharge operation from a stop state when the discharge is started and becomes the stop state again when the discharge is ended, it is difficult to maintain a discharge pressure of the liquid 108 at a constant value from immediately after the discharge is started to when the discharge is ended. Therefore, the liquid discharge device using the syringe is not suitable, for example, when performing intermittent discharge for repeating discharge and stop a plurality of times at a high speed within a certain time. The syringe 104 is repeatedly driven between an aspiration position and a discharge position to perform aspiration and discharge of the liquid 108, and since an internal volume of the syringe 104 is limited, it is difficult to continuously discharge the liquid 108 without aspirating the liquid 108 for a long time. When the liquid 108 of the same type is discharged from a plurality of the discharge units 106 at individual timings, it is difficult to independently control the discharge amounts of the liquid 108 in the plurality of discharge units 106 using one syringe 104 regardless of the discharge timing. In this case, by adding flow path components and driving components such as syringes in the same number as the number of discharge units 106, the liquid 108 can be discharged from the discharge units 106 without being affected by other discharge units 106. However, the cost of the control system increases in proportion to the total number of discharge units 106.

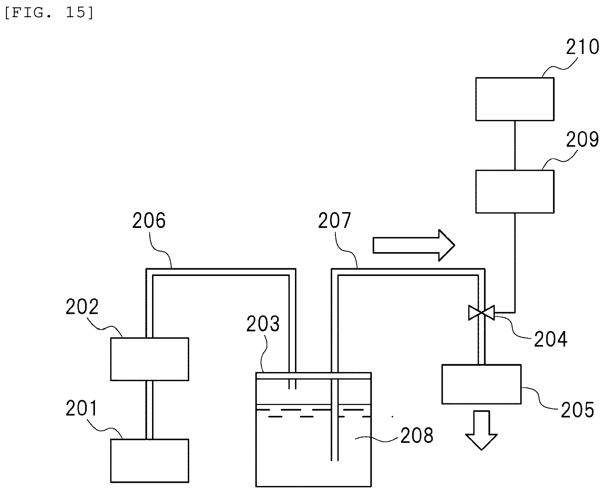

FIG. 15 is a schematic diagram illustrating a liquid discharge device, which is a liquid discharge device according to Comparative Example 2, (hereinafter referred to as a compressed air type) that performs discharge by opening and closing a solenoid valve for a certain time using compressed air as a pressure source. The liquid discharge device includes a pressure-resistant liquid container 203 containing a liquid 208, a compressed air supply source 201, a pressure adjustment valve 202, a discharge solenoid valve 204, a discharge unit 205, a compressed air tube 206, a flow path (liquid tube) 207, a discharge solenoid valve control circuit 209, and a control unit 210. As illustrated in FIG. 15, the pressure of the compressed air generated by the compressed air supply source 201 such as a compressor is adjusted to correspond to the discharge pressure of the liquid 208 by the pressure adjustment valve 202 such as a regulator. The pressure-resistant liquid container 203 needs to have pressure resistance against the pressure adjusted by the pressure adjustment valve 202. The discharge amount of the liquid 208 whose discharge pressure is adjusted by the pressure adjustment valve 202 in the pressure-resistant liquid container 203 is controlled by opening and closing the discharge solenoid valve 204 for a time managed by the control unit 210. The discharge solenoid valve 204 is opened and closed by the discharge solenoid valve control circuit 209.

However, since a compressor, a regulator, and the like are required in the compressed air type, the size of the entire system may become large. Under the pressurization condition in the pressure-resistant liquid container 203, the gas dissolved in the liquid 208 cannot be dissolved in the liquid 208 due to a rapid pressure change (decompression) at the time of discharge. As a result, bubbles are likely to be generated inside or around the discharged liquid 208. This leads to deterioration in quality of the discharged liquid 208. Therefore, for example, the present compressed air type is not suitable for applications in which the discharged liquid 208 needs to be free of air bubbles. To store the liquid 208 to be discharged, it is necessary to use the pressure-resistant liquid container 203 having a pressure resistance and sealing structure. However, the capacity of the pressure-resistant liquid container 203 is limited. Therefore, when the remaining amount of the liquid 208 in the pressure-resistant liquid container 203 is insufficient, it is necessary to release the pressure in the pressurized pressure-resistant liquid container 203 to the atmosphere, open the pressure-resistant liquid container 203, and then add and replenish the liquid 208. As a result, the system needs to be stopped while the liquid 208 is being replenished. In the pressure-resistant liquid container 203, the liquid 208 has a configuration of being constantly in contact with the compressed air, increasing the risk of pollution contamination. Internal cleaning is performed when the flow path is polluted, such as contamination or the like occurs, but since the pressure-resistant liquid container 203 has a sealing structure, the flow path cannot be cleaned quickly, and as a result, the system needs to be stopped for a long time.

As described above, there is room for improvement in the liquid discharge device of the syringe type and the liquid discharge device of the compressed air type. Therefore, in the embodiments of the present application, measures are taken to resolve the above room for improvement. Hereinafter, the technical idea in the embodiments to which this contrivance is applied will be described.

### (Embodiment 1)

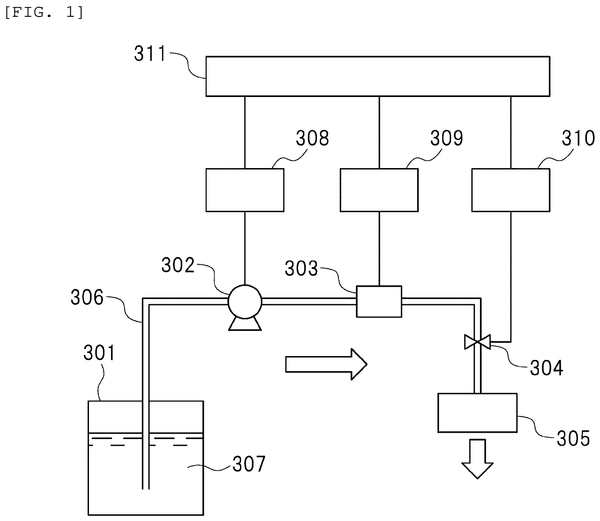

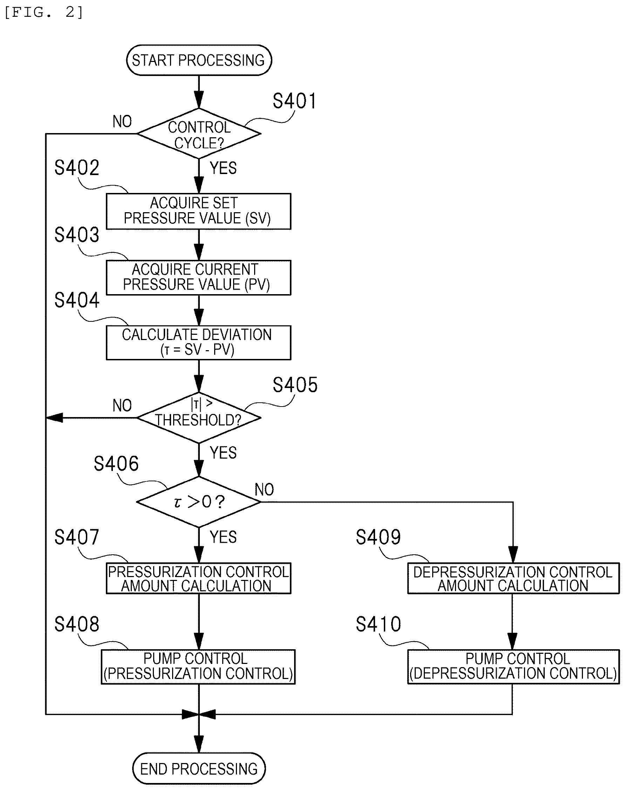

Hereinafter, the present embodiment will be described with reference to FIG. 1 and FIG. 2. A liquid referred to in the following embodiments is, for example, a chemical solution (reagent) used in a test.

FIG. 1 is a schematic diagram illustrating a liquid discharge device (hereinafter referred to as a pump type) according to the present embodiment. The liquid discharge device includes a liquid container 301 containing a liquid 307, a pump 302, a pressure sensor 303, a discharge solenoid valve 304, a discharge unit 305, a flow path (liquid tube) 306, a pump control circuit 308, a pressure sensor processing circuit 309, a discharge solenoid valve control circuit 310, and a control unit 311.

The liquid container 301 and the pump 302 are connected via a flow path 306. The pump 302 and the pressure sensor 303 are connected via the flow path 306. The pressure sensor 303 and the discharge unit 305 are connected via the flow path 306, and the discharge solenoid valve 304 is provided in the middle of the flow path 306 between the pressure sensor 303 and the discharge unit 305. The control unit 311 is connected to each of the pump control circuit 308, the pressure sensor processing circuit 309, and the discharge solenoid valve control circuit 310. The pump control circuit 308 is connected to the pump 302, the pressure sensor processing circuit 309 is connected to the pressure sensor 303, and the discharge solenoid valve control circuit 310 is connected to the discharge solenoid valve 304.

That is, the liquid discharge device according to the present embodiment includes the pump 302 that feeds the liquid 307, a discharge unit that discharges a liquid, the discharge unit 305 that discharges the liquid 307, the pressure sensor 303 that monitors the pressure of the liquid 307, and the discharge solenoid valve 304 that controls the discharge of the liquid 307 in the discharge unit 305. The liquid discharge device according to the present embodiment further includes the control unit 311 which controls the pressure of the liquid 307 to be constant and the flow path 306 of the liquid 307 that connects the pump 302, the discharge unit 305, the pressure sensor 303, and the discharge solenoid valve 304. The pressure sensor 303 does not detect a fluctuation of a flow rate of the liquid 307 by pressure, but detects the pressure of the liquid 307 in a standby state.

In FIG. 1, a flow path direction of the liquid and the discharge of the liquid in the liquid discharge device are indicated by white arrows. This also applies to schematic diagrams of another liquid discharge device used in the following description.

FIG. 2 is an example of a flow of liquid pressure control according to the present embodiment. Here, first, the control unit 311 determines whether a current time is a control cycle of pressure control (step S401). The control cycle of the pressure control refers to a timing of pressure adjustment processing periodically performed in the liquid discharge device according to the present embodiment. Next, if the current time is not the control cycle in step S401, no processing is performed. If the current time is the control cycle in step S401, acquisition of a set pressure value (SV) (step S402), acquisition of a current pressure value (PV) measured by the pressure sensor 303 and processed by the pressure sensor processing circuit 309 (step S403), and calculation of a deviation (τ = SV - PV) (step S404) are sequentially performed. Next, it is determined whether a conditional expression | τ| > threshold for comparing an absolute value |τ| of the deviation calculated in step S404 with a threshold is satisfied (step S405). If |τ| > threshold is not satisfied, no processing is performed, and if |τ| > threshold is satisfied, the pressure control is performed in step S406 and subsequent steps. Step S405 is processing executed to perform sensitivity adjustment on a control system for pressure control or to perform control within a preset control width and may be omitted as necessary, and the conditional expression may be |τ| > 0.

Next, whether the deviation (τ) is positive or negative is determined by a conditional expression (τ > 0) (step S406). If the deviation (τ) is positive in step S406, it becomes a state in which the set pressure value (SV) > the current pressure value (PV), and thus pressurization is required. Therefore, pressurization control amount calculation (step S407) and pump control (step S408) are performed. A liquid feeding direction of the pump 302 in step S408 is controlled by the pump control circuit 308 such that the liquid is fed toward a discharge unit direction for pressurization. If the deviation (τ) is negative in step S406, it becomes a state in which the set pressure value (SV) < the current pressure value (PV), and thus depressurization is required. Therefore, depressurization control amount calculation (step S409) and pump control (step S410) are performed. A liquid feeding direction of the pump 302 in step S410 is controlled by the pump control circuit 308 such that the liquid is fed toward a liquid container direction for depressurization. If the deviation (τ) is 0 in step S406, it becomes a state in which the set pressure value (SV) = the current pressure value (PV) is satisfied, and thus a control amount in the subsequent depressurization control amount calculation (step S409) is 0. In this way, the liquid feeding direction of the pump 302 can be switched by external control.

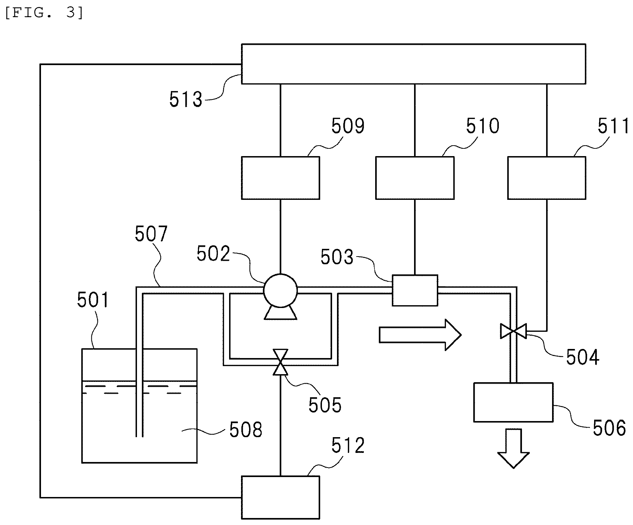

Here, PI control, PID control, or the like may be used for the pressurization control amount calculation (step S407) and the depressurization control amount calculation (step S409). Since the optimum control method varies depending on the response characteristics of the pump 302 to be used, the control amount calculation method is not particularly limited here. Since the optimum control method of the pressurization control amount calculation (step S407) and the depressurization control amount calculation (step S409) varies depending on types of an actuator (motor) that drives the pump 302, for example, either the movement position command or the rotation speed command may be used, and the actuator control method is not particularly limited. The liquid container 301 is different from the pressure-resistant liquid container 203 according to Comparative Example 2 illustrated in FIG. 15, the liquid container 301 is not pressurized and is used under atmospheric pressure, and thus a shape of the liquid container 301 is not particularly limited. However, in consideration of pollution risks such as contamination, the shape of the liquid container 301 is a shape allowing the liquid 307 not to be in direct contact with the air, and in particular, it is most effective to use a flexible bag-type container allowing the liquid container 301 to be able to be deformed according to the remaining amount of the liquid 307. FIG. 3 illustrates an aspect in which the gas is present above the liquid 307 in the liquid container 301, but, ideally, there is no gas in a liquid container 30. Even when the gas is present in the liquid container 30, since the pressure of the gas is equal to or less than the atmospheric pressure, there is an extremely low possibility that contamination occurs as compared with a case in which pressurization is performed using a gas as in Comparative Example 2.

In the liquid discharge device according to the present embodiment, according to the above flow, the control unit 311 performs feedback control such that the pressure of the liquid 307 is constantly the set pressure value (SV) and simultaneously controls the discharge amount of the liquid 307 by opening and closing the discharge solenoid valve 304 by the discharge solenoid valve control circuit 310 for a certain time. In the present embodiment, the discharge amount is controlled only by the discharge solenoid valve 304 downstream of the pump 302 (on the discharge unit 305 side). In the liquid discharge device according to the present embodiment, the flow illustrated in FIG. 2 is periodically repeated until a discharge operation is ended. A control unit that performs opening and closing control of the discharge solenoid valve 304 does not need to be the same as the control unit 311 which performs the pressure control.

### <Effects of Present Embodiment>

In the liquid discharge device of a pump type according to the present embodiment, the pump 302 having a structure in which the liquid 307 is not in direct contact with the air is used. Accordingly, it is possible to reduce an amount of gas dissolved in the liquid 307 or an amount of gas (bubbles) generated by the pressure change (depressurization) when the dissolved gas is discharged, as compared with the compressed air type. Since the liquid 307 does not need to be in direct contact with the air unlike the compressed air type, the present embodiment can be implemented even when the entire flow path is a closed-system flow path. The closed-system flow path refers to a flow path structure in which the entire flow path is not in contact with the air, and in particular, the flow path direction is not limited and is a flow path direction from the liquid container 301 toward the discharge unit 305, in which the discharged liquid 307 does not circulate, making it a one-way flow path direction, as in the liquid discharge device according to the present embodiment. As a result, the pump type according to the present embodiment has an advantage that the risk of contamination is extremely low as compared with the compressed air type. Since the pump 302 is used as a pressure source of the liquid 307, the compressed air supply source 201, the pressure adjustment valve 202, and the pressure-resistant liquid container 203 having a sealing structure with pressure resistance are not required as compared with the compressed air type, and as a result, there is an advantage that a size of the control system can be reduced.

In the present embodiment, it is essential that the liquid feeding direction of the pump 302 can be controlled such that the pressurization control and the depressurization control can be performed, respectively. In particular, the liquid feeding direction can be switched by forward rotation and reverse rotation driving of a motor for controlling the pump 302, and there are very few components in contact with the liquid because the components in contact with the liquid are only tubes. Therefore, it is ideal to use a peristaltic pump (tube pump) having a structure in which the liquid does not come into direct contact with the air as the pump 302 from a viewpoint of maintainability, sanitary performance, and the like. In the unlikely event that the flow path is polluted, such as contamination or the like occurs, the system can be recovered in a short time without stopping the system for a long time to clean the flow path, by replacing the components in contact with the liquid (cartridge units) including the tubes of the peristaltic pump. In addition to the peristaltic pump, a rotary pump, a gear pump, and other pumps called bidirectional pumps can be used as the pump 302 capable of switching the liquid feeding direction by external control. These pumps can be used as pumps used in Embodiments 2 to 5 to be described below.

### (Embodiment 2)

In above Embodiment 1, the pump 302 of the liquid discharge device can switch the liquid feeding direction, but instead, a case in which the liquid feeding direction cannot be switched and a pump having a liquid feeding function in only one direction is used will be described in the present embodiment.

FIG. 3 is a schematic diagram of a liquid discharge device according to the present embodiment. The liquid discharge device includes a liquid container 501 containing a liquid 508, a pump 502, a pressure sensor 503, a discharge solenoid valve 504, a reflux solenoid valve 505, a discharge unit 506, a flow path (liquid tube) 507, a pump control circuit 509, a pressure sensor processing circuit 510, a discharge solenoid valve control circuit 511, a reflux solenoid valve control circuit 512, and a control unit 513. The liquid container 501 and the pump 502 are connected via the flow path 507. The pump 502 and the pressure sensor 503 are connected via the flow path 507. The pressure sensor 503 and the discharge unit 506 are connected via the flow path 507, and the discharge solenoid valve 504 is provided in the middle of the flow path 507 between the pressure sensor 503 and the discharge unit 506.

Here, the flow path 507 between the liquid container 501 and the pump 502 and the flow path 507 between the pump 502 and the pressure sensor 503 are connected by the other flow path 507. The reflux solenoid valve 505 is provided in the other flow path 507. That is, two flow paths are provided between the liquid container 501 and the pressure sensor 503 by two flow paths, one of the flow paths is provided with the pump 502 and the other of the flow paths is provided with the reflux solenoid valve 505. Both ends of the two flow paths form an annular flow path. That is, the two flow paths form a reflux flow path in the entire flow path.

The control unit 513 is connected to each of the pump control circuit 509, the pressure sensor processing circuit 510, the discharge solenoid valve control circuit 511, and the reflux solenoid valve control circuit 512. The pump control circuit 509 is connected to the pump 502, the pressure sensor processing circuit 510 is connected to the pressure sensor 503, the discharge solenoid valve control circuit 511 is connected to the discharge solenoid valve 504, and the reflux solenoid valve control circuit 512 is connected to the reflux solenoid valve 505.

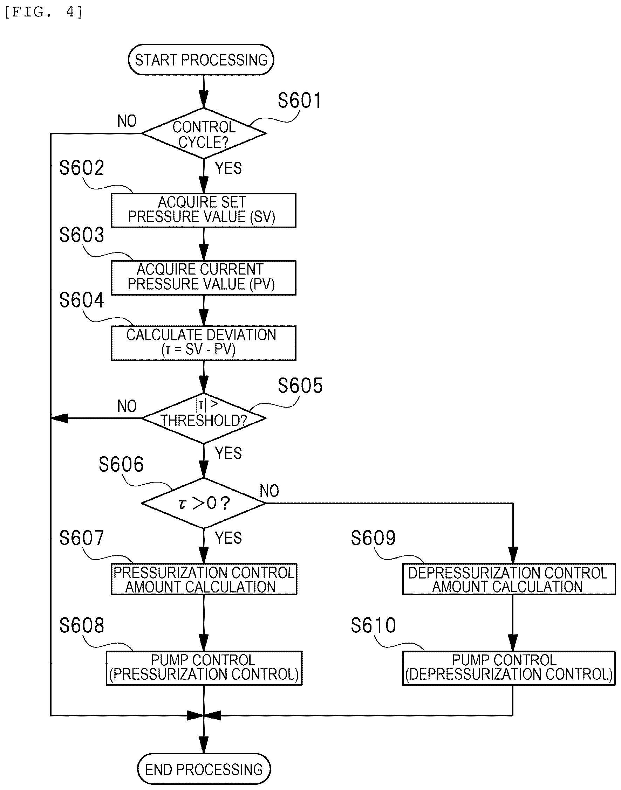

FIG. 4 is an example of a flow of liquid pressure control according to the present embodiment. In the present embodiment, the control is performed in a state in which the reflux solenoid valve 505 is released at a predetermined opening degree. Here, first, the control unit 513 determines whether a current time is a control cycle of pressure control (step S601). Next, if the current time is not the control cycle in step S601, no processing is performed. If the current time is the control cycle, acquisition of a set pressure value (SV) (step S602), acquisition of a current pressure value (PV) measured by the pressure sensor 503 and processed by the pressure sensor processing circuit 510 (step S603), and calculation of a deviation (τ = SV - PV) (step S604) are sequentially performed. Next, it is determined whether a conditional expression |τ| > threshold for comparing an absolute value |τ| of the deviation calculated in step S604 with a threshold is satisfied (step S605). If |τ| > threshold is not satisfied, no processing is performed, and if |τ| > threshold is satisfied, the pressure control is performed in step S606 and subsequent steps. Step S606 is processing executed to perform sensitivity adjustment of a control system of the pressure control or to perform control according to a control width.

Next, whether the deviation (τ) is positive or negative is determined by a conditional expression (τ > 0) (step S606). If the deviation (τ) is positive in step S606, it becomes a state in which the set pressure value (SV) > the current pressure value (PV), and thus pressurization control amount calculation (step S607) and pump control (step S608) are performed. A liquid feeding direction of the pump 502 in step S608 is controlled by the pump control circuit 509 such that the liquid is fed toward a discharge unit direction for pressurization. If the deviation (τ) is negative in step S606, it becomes a state in which the set pressure value (SV) < the current pressure value (PV), and thus the depressurization control amount calculation (step S609) and pump control (step S610) are performed. If the deviation (τ) is 0 in step S606, it becomes a state in which the set pressure value (SV) = the current pressure value (PV) is satisfied, that is, a state in which a stationary state by the set pressure value (SV) is satisfied, and thus a control amount in the subsequent depressurization control amount calculation (step S609) is 0.

As described above, the liquid feeding direction of the pump 502 according to the present embodiment cannot be switched, and the pump 502 has a liquid feeding function in only one direction. Therefore, in depressurization control in step S610, the depressurization is performed by reducing the pressure of the pump in a state in which the liquid 508 is refluxed by opening the reflux solenoid valve 505 to a predetermined opening degree. To perform continuous pressurization and depressurization control by controlling, an internal orifice diameter of the reflux solenoid valve 505 when being opened can be changed by changing an opening degree of the reflux solenoid valve 505 using a proportional valve that can be continuously controlled by pulse width modulation (PWM) control in the reflux solenoid valve control circuit 512, or the continuous pressurization and depressurization control can be used in combination with pressure control using a pump, but in the present embodiment, the method is not particularly limited. An orifice diameter is an effective diameter of the flow path. It is considered that PI (P: proportional, I: integral) control or PID (P: proportional, I: integral, D: differential) control may be used for the pressurization control amount calculation (step S607) and the depressurization control amount calculation (step S609). In the present embodiment, the control amount calculation method is not particularly limited. In the pressurization control amount calculation (step S607), either a movement position command or a rotation speed command of an actuator (motor) that drives the pump 502 may be used, and the control method is not particularly limited.

In the liquid discharge device according to the present embodiment, according to the above flow, the control unit 513 performs feedback control such that the pressure of the liquid 508 is constantly the set pressure value (SV) and simultaneously controls the discharge amount of the liquid 508 by opening and closing the discharge solenoid valve 504 by the discharge solenoid valve control circuit 511 for a certain time. In the liquid discharge device according to the present embodiment, the flow illustrated in FIG. 4 is periodically repeated until a discharge operation is ended. In the present embodiment, the pressurization and depressurization control in the flow path can be performed by controlling a liquid feed amount to the reflux flow path by the pressurization and depressurization of the pump 502.

In the present embodiment, even when a pump whose liquid feeding direction cannot be switched is used as the pump 502, highly responsive pressure control is possible. As the pump 502, a peristaltic pump, a rotary pump, a gear pump, and other pumps called bidirectional pumps can also be used.

### (Embodiment 3)

In Embodiment 1, the case in which the feedback control is performed for the pressure control of the liquid discharge device has been described. In the feedback control (see FIG. 2) according to Embodiment 1, the deviation (set pressure value - current pressure value) calculated in step S404 is used to calculate the pump control amount (steps S407 and S409), thereby performing the pump control (steps S408 and S410). Therefore, when a disturbance is applied to the liquid discharge device illustrated in FIG. 1, the deviation (set pressure value - current pressure value) caused by an influence of the disturbance increases. Accordingly, the pump control amount also increases in correlation, and as a result, the feedback control is started in a direction of canceling the disturbance slightly later than the occurrence of the disturbance. Therefore, to improve the stability of the pressure control of the liquid discharge device, the influence of the disturbance cannot be ignored. To reduce the influence of the disturbance, it is necessary to detect a degree of the disturbance by some methods and calculate a control amount for the disturbance (disturbance correction value) as the pump control amount.

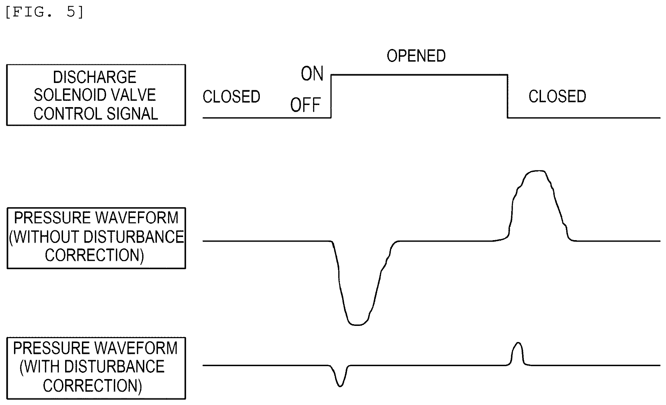

The main cause of the disturbance in the feedback control system of the liquid discharge device is none other than the opening and closing operation of the discharge solenoid valve 304. FIG. 5 illustrates a control signal of the discharge solenoid valve and a pressure graph during pressure control. FIG. 5 illustrates, in order from the top, a discharge solenoid valve control signal 701 when the discharge solenoid valve 304 is subjected to the opening and closing operation, a pressure waveform 702 according to Embodiment 1 in which control on the disturbance is not performed, and a pressure waveform 703 according to the present embodiment in which control on the disturbance is performed. As indicated by the discharge solenoid valve control signal 701 and the pressure waveform 702, when the discharge solenoid valve 304 is opened, the pressure drops suddenly, and the feedback control is performed only when the deviation reaches a positive value of a certain magnitude. As a result, the pressure drops immediately after the discharge solenoid valve 304 is opened. When the discharge solenoid valve 304 is closed, the pressure suddenly increases, and the pressure increases immediately after the discharge solenoid valve 304 is closed for the same reason. Hereinafter, in the present embodiment, a description will be given for the pressure control in which the opening and closing operation of the discharge solenoid valve 304 that causes the disturbance is detected without adding a hardware component such as a sensor serving as a disturbance detection unit to the liquid discharge device and the disturbance correction value is calculated as the control amount.

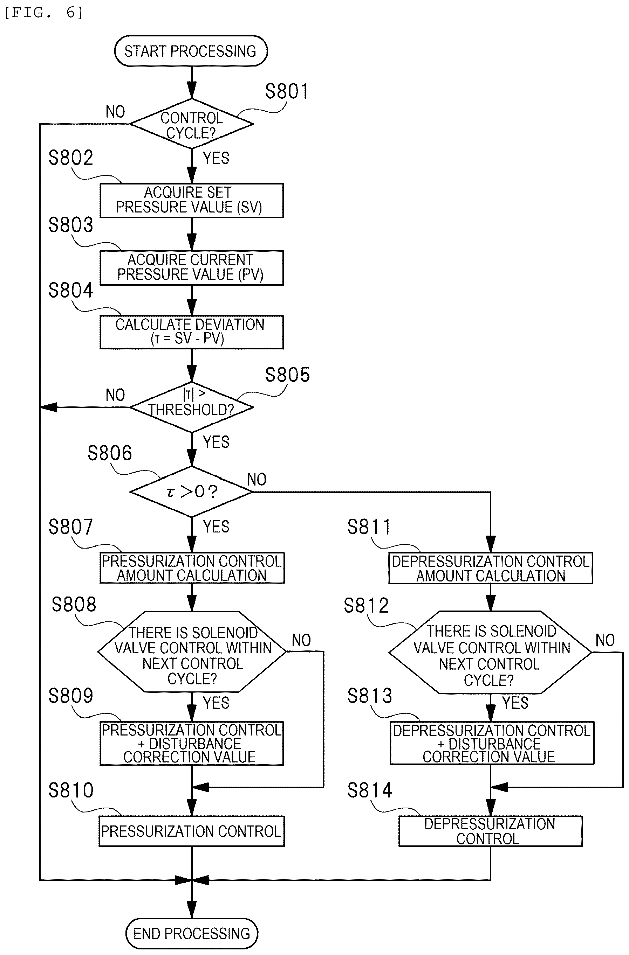

FIG. 6 is an example of a flow of liquid pressure control according to the present embodiment. First, the control unit 311 determines whether a current time is a control cycle of the pressure control (step S801). Next, if the current time is not the control cycle in step S801, no processing is performed. If the current time is the control cycle, acquisition of a set pressure value (SV) (step S802), acquisition of a current pressure value (PV) measured by the pressure sensor 303 and processed by the pressure sensor processing circuit 309 (step S803), and calculation of a deviation (τ = SV - PV) (step S804) are performed. Next, it is determined whether a conditional expression |τ| > threshold for comparing an absolute value |τ| of the deviation calculated in step S804 with a threshold is satisfied (step S805). If |τ| > threshold is not satisfied, no processing is performed, and if |τ| > threshold is satisfied, the pressure control is performed in step S806 and subsequent steps. Step S805 is processing executed to perform sensitivity adjustment of a control system of the pressure control or to perform control according to a control width.

Next, whether the deviation (τ) is positive or negative is determined by a conditional expression (τ > 0) (step S806). If the deviation (τ) is positive in step S806, it becomes a state in which the set pressure value (SV) > the current pressure value (PV), and thus pressurization control amount calculation (step S807) is performed. Subsequently, by communicating with the control unit 311 or another control unit that controls the discharge solenoid valve 304, information on whether the opening and closing operation of the discharge solenoid valve 304 is scheduled within the next control cycle is acquired (step S808). In this way, it can be said that a detection unit that acquires the information on whether the opening and closing operation of the discharge solenoid valve 304 is scheduled within the next control cycle is a disturbance detection unit.

If the opening and closing operation of the discharge solenoid valve 304 is scheduled within the next control cycle in step S808, a disturbance correction value for the opening and closing operation of the discharge solenoid valve 304 is calculated for the pressurization control amount calculated in step S407 (step S809). As indicated in the discharge solenoid valve control signal 701 (see FIG. 5) when the discharge solenoid valve 304 is subjected to the opening and closing operation, when the discharge solenoid valve 304 is opened, it is effective to calculate a disturbance correction value having an effect of increasing the pressurization control amount such that the current pressure value (PV) does not fall below the set pressure value (SV) (τ > 0) (step S809). Similarly, when the discharge solenoid valve 304 is closed, it is effective to calculate a disturbance correction value having an effect of reducing the pressurization control amount such that the current pressure value (PV) does not exceed the set pressure value (SV) (τ < 0) (step S809). On the other hand, if the opening and closing operation of the discharge solenoid valve 304 is not scheduled within the next control cycle in step S808, the pressurization control amount without the disturbance correction is calculated as in step S407 (step S809). Subsequently, pressurization control is performed according to the pressurization control amount calculated in step S809 (step S810).

If the deviation (τ) is negative in step S806, it becomes a state in which the set pressure value (SV) < the current pressure value (PV), and thus depressurization control amount calculation is performed (step S811). If the deviation (τ) is 0 in step S806, it becomes a state in which the set pressure value (SV) = the current pressure value (PV) is satisfied, that is, a state in which a stationary state by the set pressure value (SV) is satisfied, and thus the control amount in the subsequent depressurization control amount calculation (step S811) is generally 0.

Subsequently, by communicating with the control unit 311 or another control unit that controls the discharge solenoid valve 304, the information on whether the opening and closing operation of the discharge solenoid valve 304 is scheduled within the next control cycle is acquired (step S812). If the opening and closing operation of the discharge solenoid valve 304 is scheduled within the next control cycle in step S812, a disturbance correction value for the opening and closing operation of the discharge solenoid valve 304 is calculated for the depressurization control amount calculated in step S409 (step S813). As indicated in the discharge solenoid valve control signal 701 (see FIG. 5) when the discharge solenoid valve 304 is subjected to the opening and closing operation, when the discharge solenoid valve 304 is closed, it is effective to additionally calculate a disturbance correction value having an effect of increasing the depressurization control amount such that the current pressure value (PV) does not exceed the set pressure value (SV) (τ < 0) (step S813). Similarly, when the discharge solenoid valve 304 is opened, it is effective to calculate a disturbance correction value having an effect of reducing the depressurization control amount such that the current pressure value (PV) does not fall below the set pressure value (SV) (τ > 0) (step S813). Here, if the opening and closing operation of the discharge solenoid valve 304 is not scheduled within the next control cycle in step S812, the depressurization control amount is calculated as in step S409 (step S813). Subsequently, the depressurization control is performed according to the depressurization control amount calculated in step S813 (step S814).

When the disturbance correction is performed according to the above flow, the pressure waveform 703 with the disturbance correction has an effect of reducing the pressure fluctuation caused by the disturbance as compared with the pressure waveform 702 without the disturbance correction. Control having an effect of detecting the disturbance by such a method and canceling the influence of the disturbance is called prediction control or feedforward control. Here, in constant pressure control using the feedback control described in Embodiment 1, it is difficult to exhibit the effect of the control for canceling the disturbance unless the deviation (τ) of the pressure value caused by the influence of the disturbance has a certain magnitude. In contrast, in the prediction control according to the present embodiment, the influence of the disturbance can be quickly reduced by detecting the disturbance. Such prediction control is control for detecting a degree of the disturbance by some methods and reducing the influence of the disturbance and is generally open-loop control. Therefore, it is difficult to maintain a stable stationary state only by the prediction control. Therefore, in the constant pressure control according to the present embodiment, it is desirable to control the pump by finally determining the control amount by calculating (control amount + disturbance correction value) the disturbance correction calculated by the prediction control (feedforward control) as the correction value with respect to the control amount calculated by the constant pressure control (feedback control) described in Embodiment 1.

Since the main cause of the disturbance exerted on the control system of the present liquid discharge device is the opening and closing operation of the discharge solenoid valve 304, in the present embodiment, in steps S808 and S812, the disturbance is predicted by determining whether there is solenoid valve control within the next control cycle, and the disturbance correction is calculated for the pump control amount to perform the control. In the present embodiment, since a type of a disturbance detection method is not limited, for example, the disturbance may be detected by using the pressure sensor 303 as the disturbance detection unit or the disturbance may be detected by separately adding a sensor outside the control system. In this way, the influence of the disturbance can be reduced by applying the control flow illustrated in FIG. 6.

As described above, in the present embodiment, the control unit 311 performs the prediction control by detecting the disturbance by the disturbance detection unit such that the pressure of the liquid 307 is constantly the set pressure value (SV), and simultaneously controls the discharge amount of the liquid 307 by opening and closing the discharge solenoid valve 304 by the discharge solenoid valve control circuit 310 for a certain time. In the present embodiment, the same effect as that of Embodiment 1 can be obtained, and the influence of the disturbance can be reduced by controlling the discharge amount of the liquid 307 by predicting the disturbance as described above. In other words, in the present embodiment, the disturbance detection unit is provided, and the influence of the disturbance on the control system is reduced by performing the control with the control amount for correcting the influence of the disturbance with respect to the pump control amount in the constant pressure control.

### (Embodiment 4)

In Comparative Example 1 illustrated in FIG. 13 and FIG. 14, the liquid discharge device that discharges the liquid from the discharge unit 205 is illustrated. When the liquid discharge device is used, the same type of liquid may be used to be discharged from the plurality of discharge units at individual timings. The discharge timings of the individual discharge units are, for example, timings shifted from one another by 10 ms or more so as not to influence the discharge amount. Here, for the syringe type according to Comparative Example 1 and the compressed air type according to Comparative Example 2, a case in which the same type of liquid is discharged from the plurality of discharge units at individual timings will be considered. In the syringe type, when the same type of liquid is discharged from the plurality of discharge units at individual timings, it is difficult to control the discharge amounts from the plurality of discharge units in one syringe regardless of the discharge timing. In this case, by adding flow path components and driving components such as syringes in the same number as the number of discharge units, the liquid can be discharged from respective discharge units without being affected by other discharge units. However, in this case, there is a disadvantage that the cost of the control system increases in proportion to the total number of discharge units.

When the compressed air type is used, by adding the discharge solenoid valves as the number of the discharge units, it is possible to implement the discharge from the plurality of discharge units at individual timings regardless of the discharge timings. However, as described in room for improvement, the compressed air type tends to increase the size of the entire system and further has disadvantages such as the occurrence of discharged liquid and risk of contamination. Hereinafter, in a liquid discharge device using the pump type according to the present embodiment, a case in which the same type of liquid is used to be discharged from a plurality of discharge units at individual timings will be described.

The liquid discharge device according to the present embodiment includes a liquid container 901 containing a liquid 911, a pump 902, a pressure sensor 903, a first discharge solenoid valve 904, a second discharge solenoid valve 905, a third discharge solenoid valve 906, a first discharge unit 907, a second discharge unit 908, and a third discharge unit 909. The liquid discharge device according to the present embodiment further includes a flow path (liquid tube) 910, a pump control circuit 912, a pressure sensor processing circuit 913, a discharge solenoid valve control circuit 914, and a control unit 915.

The liquid container 901 and the pump 902 are connected via the flow path 910. The pump 902 and the pressure sensor 903 are connected via the flow path 910. The pressure sensor 903 is connected to each of the first discharge unit 907, the second discharge unit 908, and the third discharge unit 909 via the flow path 910. The first discharge solenoid valve 904 is provided in the middle of the flow path 910 between the pressure sensor 903 and the first discharge unit 907. The second discharge solenoid valve 905 is provided in the middle of the flow path 910 between the pressure sensor 903 and the second discharge unit 908. The third discharge solenoid valve 906 is provided in the middle of the flow path 910 between the pressure sensor 903 and the third discharge unit 909. The control unit 915 is connected to each of the pump control circuit 912, the pressure sensor processing circuit 913, and the discharge solenoid valve control circuit 914. The pump control circuit 912 is connected to the pump 902, the pressure sensor processing circuit 913 is connected to the pressure sensor 903, and the discharge solenoid valve control circuit 914 is connected to each of the first discharge solenoid valve 904, the second discharge solenoid valve 905, and the third discharge solenoid valve 906.

A flow of liquid pressure control according to the present embodiment is the same as the flow in Embodiment 1 (see FIG. 2). The liquid discharge according to the present embodiment is performed by controlling the first discharge solenoid valve 904, the second discharge solenoid valve 905, and the third discharge solenoid valve 906 by the discharge solenoid valve control circuit 914 and the control unit 915. That is, the discharge from the first discharge unit 907 is controlled by the first discharge solenoid valve 904, the discharge from the second discharge unit 908 is controlled by the second discharge solenoid valve 905, and the discharge from the third discharge unit 909 is controlled by the third discharge solenoid valve 906.

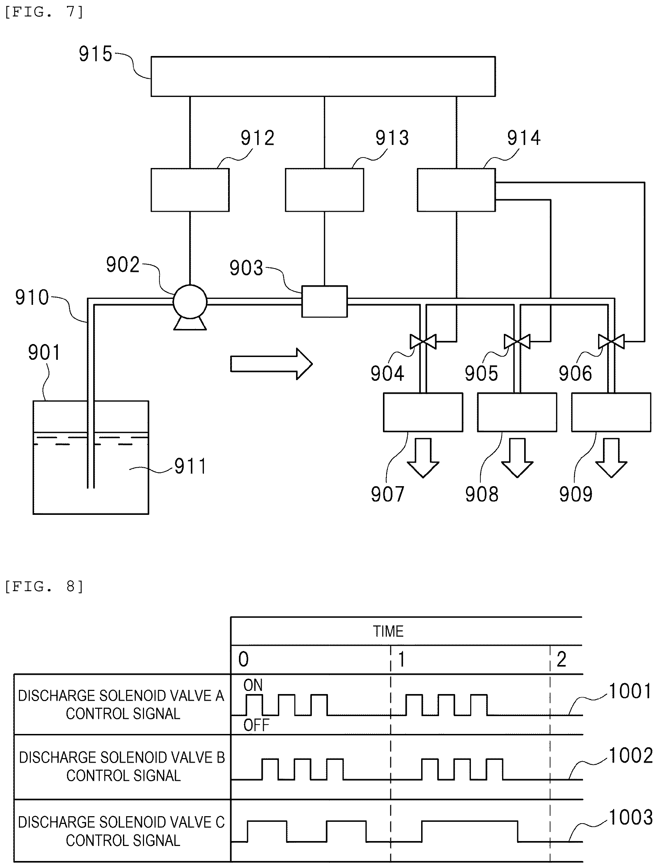

FIG. 8 illustrates control signals of the first discharge solenoid valve 904, the second discharge solenoid valve 905, and the third discharge solenoid valve 906 according to the present embodiment. As illustrated in FIG. 8, here, by performing opening and closing control at different opening and closing timings from respective discharge solenoid valves, liquid discharge can be performed from the discharge units in different discharge patterns. Each of the discharge solenoid valves according to the present embodiment is controlled by the discharge solenoid valve control circuit 914. The control of each of the discharge solenoid valves may be performed by the same control unit 915 or may be performed by individual control units 915, and a method thereof is not limited. In the present embodiment, since there are a plurality of discharge units, a discharge flow rate is larger than that when there is one discharge unit, and as a result, a liquid feed amount of the pump 902 in the constant pressure control also increases. Therefore, in the present embodiment, it is important to use the pump 902 having a liquid feed amount corresponding to the number of discharge units.

In the present embodiment, as illustrated in FIG. 8, intermittent discharge of the liquid can be performed by opening and closing the discharge solenoid valves at a high speed. In such intermittent discharge, since an air layer (segmented air) enters the discharge liquid, it is possible to clean an object only by discharging the liquid without significantly damaging the object. Therefore, the liquid discharge device according to the present embodiment can be applied as a cleaning mechanism. It is needless to say that the discharge of the liquid according to the present embodiment is not limited to the intermittent discharge.

As described above, in the liquid discharge device according to the present embodiment, the control unit 915 performs feedback control such that the pressure of the liquid 911 is constantly the set pressure value (SV), and simultaneously controls the discharge amount of the liquid 911 in each of the first discharge unit 907, the second discharge unit 908, and the third discharge unit 909 by opening and closing each of the first discharge unit 907, the second discharge unit 908, and the third discharge unit 909 by the discharge solenoid valve control circuit 914. In the present embodiment, the same effect as that of Embodiment 1 can be obtained even when the same type of liquid is discharged from the plurality of discharge units at individual timings.

### (Embodiment 5)

In Embodiment 1, the liquid discharge device that supplies the liquid 307 from the liquid container 301 illustrated in FIG. 1 has been described. In the liquid discharge device, when the liquid 307 is exhausted from the liquid container 301, the pump 302 cannot discharge the liquid 307, and the system needs to be stopped. When the discharge of the liquid 307 continues to be performed, it is necessary to perform a reset operation such as removing air bubbles in the flow path such that the liquid can be discharged again after the liquid container 301 is replenished with the liquid 307 while the system is stopped, and thus there is a problem in terms of stability and reliability of the system.

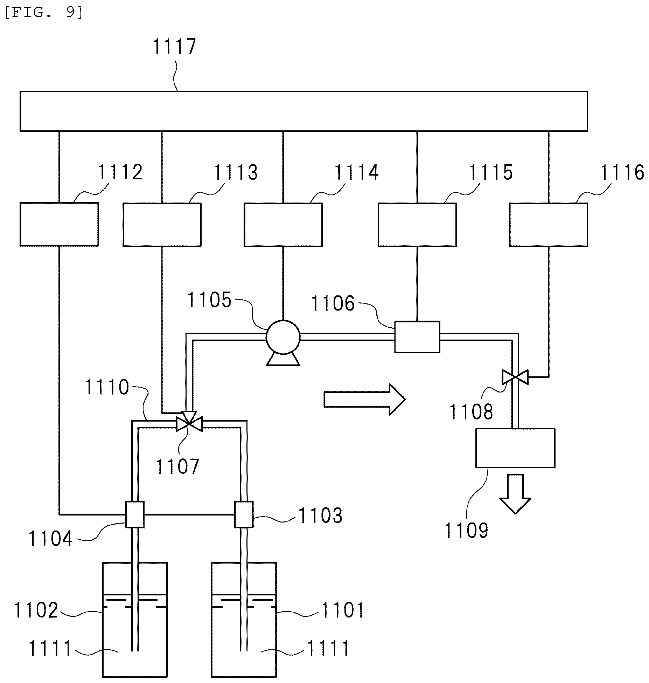

In the present embodiment, a liquid discharge device including a plurality of liquid containers, a switching solenoid valve for switching the liquid containers, and a liquid detection sensor will be described. FIG. 9 illustrates the liquid discharge device according to the present embodiment. The liquid discharge device according to the present embodiment includes a liquid container 1101 containing a liquid 1111, a liquid container 1102, a liquid detection sensor 1103 that detects the presence or absence of the liquid 1111, a liquid detection sensor 1104, a pump 1105, a pressure sensor 1106, a switching solenoid valve 1107, a discharge solenoid valve 1108, and a discharge unit 1109. The liquid discharge device according to the present embodiment further includes a flow path (liquid tube) 1110, a liquid detection sensor processing circuit 1112, a switching solenoid valve control circuit 1113, a pump control circuit 1114, a pressure sensor processing circuit 1115, a discharge solenoid valve control circuit 1116, and a control unit 1117. The liquid detection sensors 1103 and 1104 are detection units for detecting the presence or absence of the liquid in the liquid containers 1101 and 1102, respectively.

The liquid container 1101 and the switching solenoid valve 1107 are connected via the flow path 1110 in which the liquid detection sensor 1103 is provided in the middle. The liquid container 1102 and the switching solenoid valve 1107 are connected via the flow path 1110 in which the liquid detection sensor 1104 is provided in the middle. The switching solenoid valve 1107 and the pump 1105 are connected via the flow path 1110. The pump 1105 and the pressure sensor 1106 are connected via the flow path 1110. The pressure sensor 1106 and the discharge unit 1109 are connected via the flow path 1110, and the discharge solenoid valve 1108 is provided in the middle of the flow path 1110 between the pressure sensor 1106 and the discharge unit 1109. The control unit 1117 is connected to each of the liquid detection sensor processing circuit 1112, the switching solenoid valve control circuit 1113, the pump control circuit 1114, the pressure sensor processing circuit 1115, and the discharge solenoid valve control circuit 1116. The liquid detection sensor processing circuit 1112 is connected to each of the liquid detection sensors 1103 and 1104, and the switching solenoid valve control circuit 1113 is connected to the switching solenoid valve 1107. The pump control circuit 1114 is connected to the pump 1105, the pressure sensor processing circuit 1115 is connected to the pressure sensor 1106, and the discharge solenoid valve control circuit 1116 is connected to the discharge solenoid valve 1108.

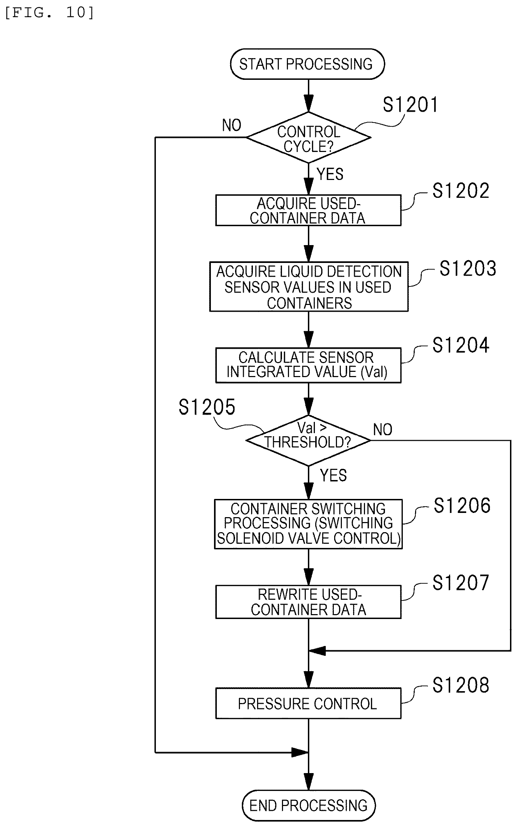

FIG. 10 illustrates an example of a control flow according to Embodiment 5. Here, first, the control unit 1117 determines whether a current time is a control cycle of pressure control (step S1201). Next, if the current time is not the control cycle in step S1201, no processing is performed. If the current time is the control cycle in step S1201, the acquisition of used-container data is performed (step S1202). Subsequently, liquid detection sensor values in used container types acquired in step S1202 are acquired (step S1203). Thereafter, an integrated value (Val) of the liquid detection sensor values acquired in step S1203 is calculated (step S1204). An object of calculating the integrated value of the liquid detection sensor values in step S1203 is to reduce the influence of noise caused by chattering or the like of the sensor, and the number of pieces of calculation data used when calculating the integrated value needs to be optimized according to periodic characteristics of a noise component.

Next, it is determined whether a conditional expression Val > threshold for comparing the integrated value (Val) calculated in step S1204 with a threshold is satisfied (step S1205). If the conditional expression Val > threshold is satisfied, it becomes a state in which there is no liquid in a liquid detection sensor unit, and thus the pressure control (see FIG. 2) described in Embodiment 1 is performed after container switching processing (step S1206) and processing of rewriting used-container data after the switching (step S1207) are performed. On the other hand, if the conditional expression Val > threshold is not satisfied, the pressure control (see FIG. 2) described in Embodiment 1 is performed without the container switching processing. By switching the liquid container in this manner, the liquid can be continuously discharged without stopping the system.

However, in this method, when liquid shortage occurs at a position of the liquid detection sensor, since replacement processing of the container occurs when a condition is satisfied that the integrated value (Val) of the liquid detection sensor values exceeds the threshold, the liquid 1111 included in the flow path from the liquid detection sensor to the switching solenoid valve 1107 becomes a dead volume and is discarded without being used for discharge. Since a dead volume amount depends on a flow path length from the liquid detection sensor to the switching solenoid valve 1107, the amount of liquid discarded as the dead volume increases as the flow path length of the system increases.

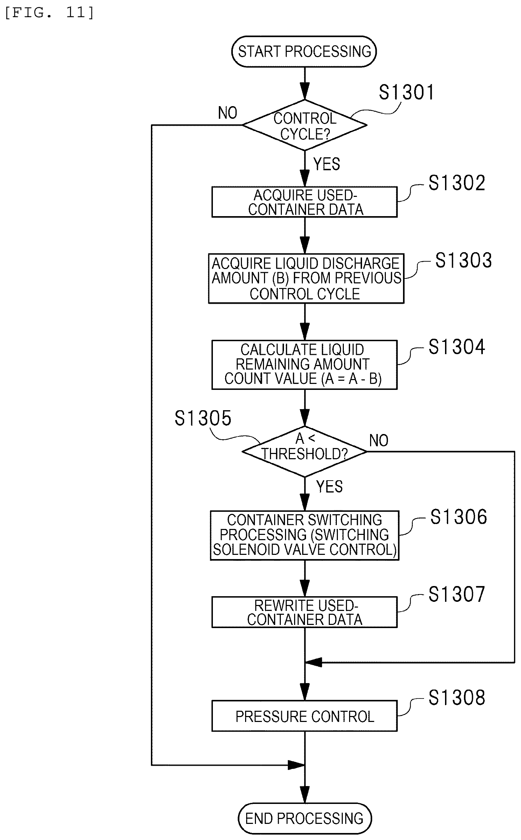

Therefore, FIG. 11 illustrates a control flow in a discharge system in which the liquid detection sensors 1103 and 1104 are removed and a liquid remaining amount count value is calculated from an opening time of the solenoid valve to perform liquid switching in the liquid discharge device illustrated in FIG. 9. Here, first, the control unit 1117 determines whether a current time is a control cycle of pressure control (step S1301). Next, if the current time is not the control cycle in step S1201, no processing is performed. If the current time is the control cycle in step S1201, the acquisition of used-container data is performed (step S1302). Subsequently, a liquid discharge amount (B) from the previous control cycle in the used container type acquired in step S1302 is acquired (step S1303). Next, the calculation (A - B) for updating a liquid remaining amount count value (A) is performed using the liquid discharge amount (B) from the previous control cycle acquired in step S1303 as difference data (step S1304). That is, here, the liquid discharge device includes a liquid remaining amount detection unit that acquires the liquid discharge amount from the previous control cycle in the used container type and calculates the liquid remaining amount count value. The liquid remaining amount detection unit detects the liquid remaining amount based on the liquid remaining amount count value calculated from the total open time of the discharge solenoid valve.

Next, it is determined whether a conditional expression A < threshold for comparing the liquid remaining amount count value (A) calculated in step S1304 with a threshold is satisfied (step S1305). If the conditional expression A < threshold is satisfied, it becomes a state in which the liquid remaining amount count value (A) is reduced, and thus the pressure control (see FIG. 2) described in Embodiment 1 is performed after container switching processing (step S1306) and processing of rewriting used-container data after the switching (step S1307) are performed. On the other hand, if the conditional expression A < threshold is not satisfied, it becomes a state in which the liquid remaining amount count value (A) is not so small as to switch the container, and thus the pressure control (see FIG. 2) described in Embodiment 1 is performed without performing the container switching processing.

In this case, since the liquid detection sensor is unnecessary, liquid switching processing can be performed without increasing the cost of the system. However, when the liquid container is set in the system, since there is no deviation between the liquid remaining amount count value and an actual liquid remaining amount, it is necessary to always set the liquid amount in a state of a constant value, and thus the workload of the operator may increase. In a subtraction method using the liquid remaining amount count value, the liquid remaining amount count value needs to be set with a margin to prevent the actual liquid remaining amount from being less than a theoretical remaining amount. As a result, a difference between the remaining amount and the theoretical value becomes a dead volume that is discarded without being used for discharge, making it issue.

Then, for example, when the liquid container becomes empty for some reason in a state in which the liquid remaining amount count value (A) satisfies A > the threshold, that is, in a state in which the liquid remaining amount count value (A) is not so small as to switch the container, the system does not include a unit that detects the presence or absence of the liquid such as the liquid detection sensor, and thus the system cannot detect the abnormal state and the liquid containing air is discharged.

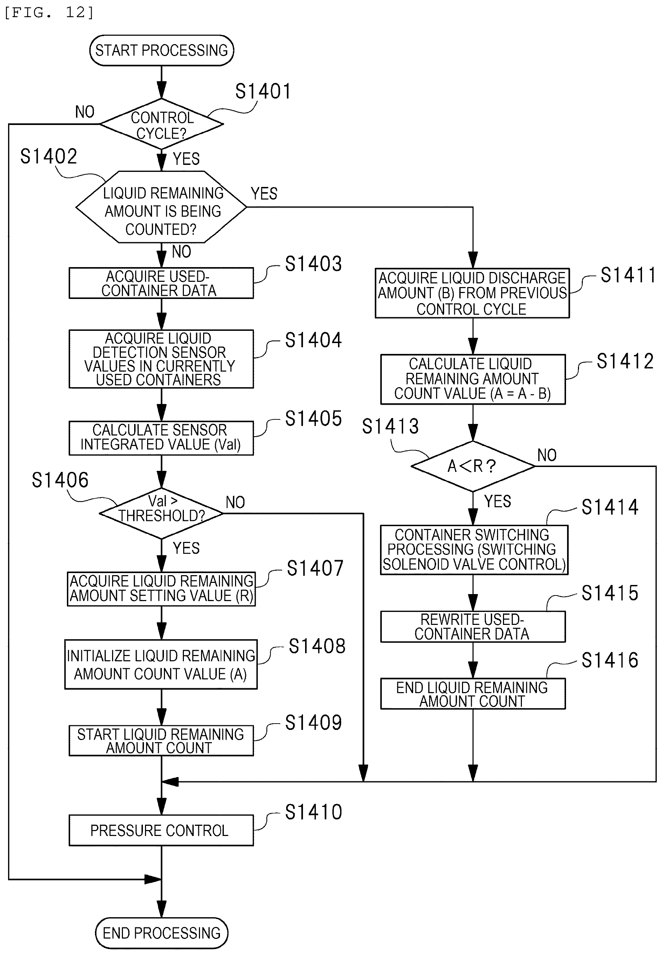

Therefore, to solve these problems, FIG. 12 illustrates an example of a control flow in which the read value of the liquid detection sensor and the liquid remaining amount count value are used together to reduce the dead volume which is the problem and enables switching of the liquid container even in an abnormal state such as when a sudden liquid shortage occurs in the liquid discharge device including the liquid detection sensor illustrated in FIG. 9. Here, first, the control unit 1117 determines whether a current time is a control cycle of pressure control (step S1401). Next, if the current time is not the control cycle in step S1401, no processing is performed. If the current time is the control cycle in step S1401, it is determined whether the liquid remaining amount is being counted (step S1402). If it is determined in step S1402 that the liquid remaining amount is not being counted, the used-container data is acquired to start monitoring by the liquid detection sensor (step S1403). Subsequently, liquid detection sensor values in used container types acquired in step S1403 are acquired (step S1404). Thereafter, an integrated value (Val) of the liquid detection sensor values acquired in step S1404 is calculated (step S1405). An object of calculating the integrated value of the liquid detection sensor values in step S1405 is to reduce the influence of chattering of the sensor values, and the number of pieces of calculation data used when calculating the integrated value needs to be optimized according to the periodic characteristics of chattering and the like.

Next, it is determined whether a conditional expression Val > threshold for comparing the integrated value (Val) calculated in step S1405 with a threshold is satisfied (step S1406). If the conditional expression Val > the threshold is satisfied, since it becomes a state in which there is no liquid in the liquid detection sensor unit, the liquid remaining amount count is performed such that the dead volume of liquid can be effectively used for discharge. Thereafter, acquisition of a liquid remaining amount setting value (R) for the liquid remaining amount count (step S1407), initialization of the liquid remaining amount count value (A) (step S1408), and start of the liquid remaining amount count (step S1409) are sequentially performed, and subsequently, the pressure control described in Embodiment 1 (see FIG. 2) is performed.

If the conditional expression Val > threshold is not satisfied in step S1406, the pressure control (see FIG. 2) described in Embodiment 1 is performed without the container switching processing.

When the liquid remaining amount is counted in step S1402, the liquid discharge amount (B) from the previous control cycle is acquired (step S1411). Subsequently, the calculation (A - B) for updating the liquid remaining amount count value (A) is performed using the liquid discharge amount (B) from the previous control cycle acquired in step S1411 as difference data (step S1412). Next, it is determined whether a conditional expression A < R for comparing the liquid remaining amount count value (A) calculated in step S1412 with the liquid remaining amount setting value (R) is satisfied (step S1413). If the conditional expression A < R is satisfied, it becomes a state in which the liquid remaining amount count value (A) is reduced, and thus the pressure control (see FIG. 2) described in Embodiment 1 is performed after container switching processing (step S1414), processing of rewriting used-container data after the switching (step S1415), and liquid remaining amount count end processing (step S1416) are sequentially performed. On the other hand, if the conditional expression A < R is not satisfied, the pressure control (see FIG. 2) described in Embodiment 1 is performed.

As described above, by using the flow illustrated in FIG. 12, since the switching of the liquid container is performed by the liquid remaining amount count value after the liquid detection sensor detects the liquid shortage in the normal time, it is possible to implement the liquid discharge device in which the dead volume is reduced and the waste of the liquid at the time of the container switching is minimized. In addition, even in an abnormal state in which the liquid container runs out of the liquid due to a sudden liquid surge, since the liquid container is switched based on the liquid remaining amount count value from that time as in the normal state, it is possible to implement a highly reliable liquid discharge device in which the dead volume is reduced.

In Embodiment 1, it has been described that it is effective to use a deformable flexible bag type container as the liquid container. In such a bag type container, since it is extremely difficult to provide a liquid level sensor therein, it is difficult to detect the liquid remaining amount in the liquid container by the liquid level sensor. Therefore, when a flexible bag type container or the like is used as the liquid container, the present embodiment including the detection unit outside the liquid container has an advantageous effect.

As described above, in the present embodiment, the control unit 1117 performs the feedback control such that the pressure of the liquid 1111 is constantly the set pressure value (SV), and simultaneously controls the discharge amount continuously without running out of the liquid 1111 by monitoring the remaining amounts in the liquid container 1101 and the liquid container 1102 and performing the container switching.

Although the invention made by the present inventors has been specifically described based on the embodiments, the invention is not limited to the embodiments, and various modifications can be made without departing from the gist of the invention.

### Industrial Applicability

The invention can be widely used for a liquid discharge device.

### Reference Signs List

- 301:: liquid container
- 302:: pump
- 303:: pressure sensor
- 304:: discharge solenoid valve
- 305:: discharge unit
- 306:: flow path (liquid tube)
- 306:: flow path
- 307:: liquid
- 308:: pump control circuit
- 309:: pressure sensor processing circuit
- 310:: discharge solenoid valve control circuit
- 311:: control unit

## Claims

1. A liquid discharge device comprising:
a pump configured to feed a liquid;
a discharge unit configured to discharge the liquid;
a pressure sensor configured to monitor a pressure of the liquid;
a discharge solenoid valve configured to control discharge of the liquid in the discharge unit;
a control unit configured to control the pressure of the liquid to be constant; and
a flow path of the liquid that connects the pump, the discharge unit, the pressure sensor, and the discharge solenoid valve to one another, wherein
a liquid discharge amount is controlled by an opening and closing time of the discharge solenoid valve in a state in which the pressure of the liquid is controlled to be constant by the control unit.

2. The liquid discharge device according to claim 1, wherein
the flow path is a closed-system flow path having a structure in which the liquid is not in direct contact with air.

3. The liquid discharge device according to claim 1, further comprising:
the plurality of discharge units; and
the discharge solenoid valves of the same number as the plurality of discharge units, wherein
a liquid discharge amount in each of the plurality of the discharge units is independently controlled.

4. The liquid discharge device according to claim 1, wherein
a liquid feeding direction of the pump is switchable by external control.

5. The liquid discharge device according to claim 4, wherein
the pump is a peristaltic pump having a structure in which the liquid does not come into direct contact with air.

6. The liquid discharge device according to claim 1, further comprising:
a reflux flow path provided in the flow path; and
a reflux solenoid valve configured to control the reflux flow path, wherein
pressurization and depressurization control in the flow path is performed by controlling a liquid feed amount to the reflux flow path by the pump.

7. The liquid discharge device according to claim 6, wherein
the reflux solenoid valve is capable of continuously controlling an internal orifice diameter.

8. The liquid discharge device according to claim 1, further comprising:
a disturbance detection unit, wherein
the pump control amount in the constant pressure control is controlled by a control amount for correcting an influence of the disturbance, and the influence of the disturbance on the control system is reduced.

9. The liquid discharge device according to claim 8, wherein
the disturbance detection unit determines whether there is opening and closing control of the discharge solenoid valve within a next control cycle, and performs control with a control amount for correcting an influence of the disturbance with respect to a pump control amount in the constant pressure control when there is opening and closing control.

10. The liquid discharge device according to claim 1, further comprising:
a plurality of liquid containers;
a switching solenoid valve configured to switch the plurality of liquid containers; and
a detection unit for a liquid remaining amount in each of the plurality of liquid containers or a detection unit for presence or absence of the liquid in the flow path, wherein
the liquid is configured to be continuously discharged without stopping a system by switching from a liquid container determined to be out of liquid to a liquid container containing the liquid among the plurality of liquid containers by the switching solenoid valve.

11. The liquid discharge device according to claim 10, wherein
the detection unit for presence or absence of the liquid is a liquid detection sensor.

12. The liquid discharge device according to claim 10, wherein
the detection unit for the liquid remaining amount detects the liquid remaining amount based on a liquid remaining amount count value calculated from a total open time of the discharge solenoid valve.

13. The liquid discharge device according to claim 10, wherein
the detection unit uses a combination of a liquid detection sensor and a liquid remaining amount count value calculated from a total open time of the discharge solenoid valve.
